# EUROPÄISCHE PATENTSCHRIFT

(11) **EP 2 136 101 B1**
(45) Veröffentlichungstag und Bekanntmachung des Hinweises auf die Patenterteilung: **08.12.2010**
(21) Anmeldenummer: 09007181.2
(22) Anmeldetag: 29.05.2009
(51) Int. Cl.: F16F 9/512

(54) **Schwingungsdämpfer mit amplitudenselektiver Dämpfkraft**
Vibration damper with amplitude dependent damping force
Amortisseur de vibrations avec une force d'amortissement dépendant de l'amplitude

(30) Priorität: 16.06.2008 DE 102008002434
(43) Veröffentlichungstag der Anmeldung: 23.12.2009
(73) Patentinhaber: ZF Friedrichshafen AG, 88038 Friedrichshafen (DE)
(72) Erfinder: Berger, Stefan, 97078 Würzburg (DE)

(56) Entgegenhaltungen:
- DE-A1- 10 306 364
- DE-A1- 19 948 328
- DE-B4- 10 022 029
- FR-A- 2 425 585

## Beschreibung

Die Erfindung betrifft einen Schwingungsdämpfer mit amplitudenselektiver Dämpfkraft gemäß dem Oberbegriff von Patentanspruch 1.

Für die Realisierung eines Schwingungsdämpfers mit amplitudenselektiver Dämpfkraft haben sich im Wesentlichen zwei bevorzugte Bauformen herauskristallisiert. Ein erstes Prinzip wird durch die DE 199 48 328 A1 (US 6,352,145 B1) beschrieben. Zu einem mit Ventilscheiben bestückten Dämpfventil liegt ein Bypass vor, der von einem reibkraftgesteuerten Ventilring in Abhängigkeit der Hubbewegung einer Kolbenstange zwischen zwei Anschlagflächen beweglich gelagert ist. Dieser Ventilring öffnet oder verschließt den Bypass und bestimmt damit die Dämpfkraftkennlinie. Der Abstand zwischen den beiden Anschlagflächen ist identisch mit der Hublänge des Schwingungsdämpfers mit verminderter Dämpfkraft.

Ein zweites Prinzip zeichnet sich vereinfacht dadurch aus, dass eine Arbeitskammer mit mindestens einer beweglichen Wandung parallel zu einem Dämpfventil geschaltet ist und bei einer Federungsbewegung Dämpfmedium bis zu einem definierten Volumen aufnehmen kann, bevor das Dämpfventil einsetzt. Beispielhaft wird auf die DE 100 22 029 B4 (US 6,220,409 B1) verwiesen. Die bewegliche Wandung wird entweder von einer Membran z. B. FR 2425 585 A, Fig. 1, oder einer starren Scheibe gebildet werden. Insbesondere eine starre Scheibe benötigt in der Arbeitskammer einen vergleichsweise großen Volumenanteil, der letztlich als Verlustvolumen anzusehen ist. Deshalb nimmt die Arbeitskammer einen vergleichsweise großes Volumen ein, das man zunehmend innerhalb einer hohlen Kolbenstange anordnet, wie z. B. in der DE 103 06 364 A1 (US 6,561,326 B2).

Die Aufgabe der vorliegenden Aufgabe besteht darin, einen Schwingungsdämpfer mit amplitudenselektiver Dämpfkraft derart weiterzuentwickeln, dass insbesondere das Volumen für die Arbeitskammer in einem günstigen Verhältnis zur Hublänge des Schwingungsdämpfers mit verminderter Dämpfkraft steht.

Erfindungsgemäß wird die Aufgabe dadurch gelöst, dass die Arbeitskammer einen kreisringförmigen Querschnitt aufweist, in der die Wandung in Umfangsrichtung beweglich ausgeführt ist, wobei ein Zulauf in die Arbeitskammer von einem Ablauf von einer ortsfesten Wandung getrennt sind.

Der große Vorteil besteht darin, dass nur eine relativ kleinflächige bewegliche Wandung benötigt wird, die deshalb auch vergleichsweise dünn ausgeführt sein kann. Daraus ergibt sich ein günstiges Verlustvolumen.

In weiterer vorteilhafter Ausgestaltung wird die Arbeitskammer von einem Außenring und einem Innenring gebildet und zwischen beiden Ringen liegt als ortsfeste Wandung ein Steg vor. Die Ringe können aus einem einfachen Rohr-Halbzeug hergestellt werden.

Um einen möglichst einfach Anschluss der Arbeitskammer an einen Arbeitsraum zu erreichen, ist in mindestens einem der beiden Ringe die Anschlussöffnung zu einem der beiden Arbeitsräume ausgeführt. Ein Bypass über eine hohlgebohrte Kolbenstange ist nicht notwendig.

Gemäß einem vorteilhaften Unteranspruch weist die Arbeitskammer eine Deckscheibe auf, die für mindestens eine Ventilscheibe des Dämpfventils eine Stützscheibe bildet. Dadurch ergibt sich eine axial kompakte Bauweise.

Es ist vorgesehen, dass sich der Außenring an der Deckscheibe zentriert. Diese Bauweise vereinfacht zusätzlich den Aufwand für ein die Arbeitskammer aufnehmendes Gehäuse.

Aus demselben Grund sind der Außenring und der Innenring zwischen der Stützscheibe und einer weiteren Scheibe axial verspannt.

Bei einem Schwingungsdämpfer mit amplitudenabhängiger Dämpfkraft besteht das generelle Problem, wie die Arbeitskammer, die in der Regel unmittelbar an einem Arbeitsraum angeschlossen ist, mit dem anderen durch den Kolben getrennten Arbeitsraum verbunden werden kann. In der Regel wird ein L-förmiger Bypasskanal verwendet, der jedoch die Kolbenstange in ihrem Querschnitt schwächt und zudem relativ teuer in der Herstellung ist.

Als ein Teil der Maßnahmen, um diesem Problem zu begegnen, weist die Stützscheibe einen Anschlusskanal auf, der einen Teil der Bypassverbindung bildet.

U. a. weist dazu die Stützscheibe einen Hülsenabschnitt auf, der sich stirnseitig am Kolben abstützt. In dem Hülsenabschnitt ist mindestens eine Axialnut als Teil der Bypassverbindung ausgeführt.

Des Weiteren ist in dem Hülsenabschnitt der Stützscheibe mindestens eine Radialöffnung als Teil der Bypassverbindung ausgeführt. Diese Radialöffnung kann z. B. in einer Stirnfläche des Hülsenabschnitts vorliegen, so dass eine sehr einfache Fertigung, z. B. mittels Sintern, durchgeführt werden kann.

Als weitere Maßnahme zu Vereinfachung der Bypassverbindung weist eine Ventilscheibe des Dämpfventils einen Kanal zur Arbeitskammer auf.

Dazu weist die Ventilscheibe einen Absatz zu einer Ventilsitzkontaktfläche auf.

Der Absatz der Ventilscheibe ist vorteilhafterweise an eine Durchtrittsöffnung des Dämpfventils angeschlossen. Ein zusätzlicher Kanal durch den Kolben ist deshalb nicht notwendig.

Einer der Ringe, die die Arbeitskammer begrenzen, weist einen Zentrierabsatz auf, wobei der Differenzdurchmesser zwischen dem Ring und dem Zentrierabsatz einen Teilabschnitt der Bypassverbindung bildet.

Anhand der folgenden Figurenbeschreibung soll die Erfindung näher erläutert werden Es zeigt:
- Fig. 1: Explosionszeichnung einer Dämpfventileinrichtung
- Fig. 2a - 2c: Schnittdarstellungen der Dämpfventileinrichtung nach Fig. 1 in ver- schiedenen Betriebsstellungen
- Fig. 3a - 3c: Draufsichtung auf Arbeitskammer zu den Fig. 2a - 2c

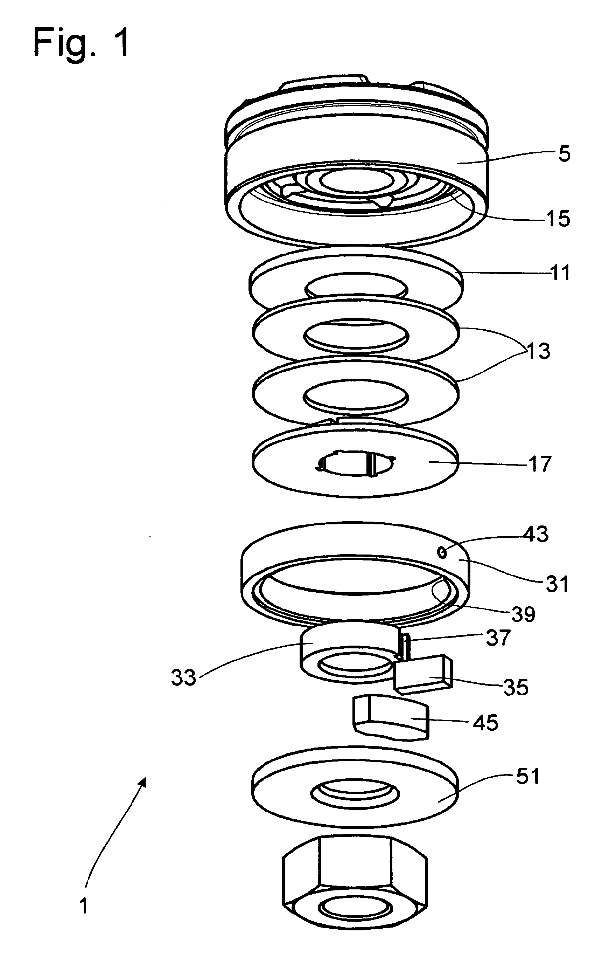

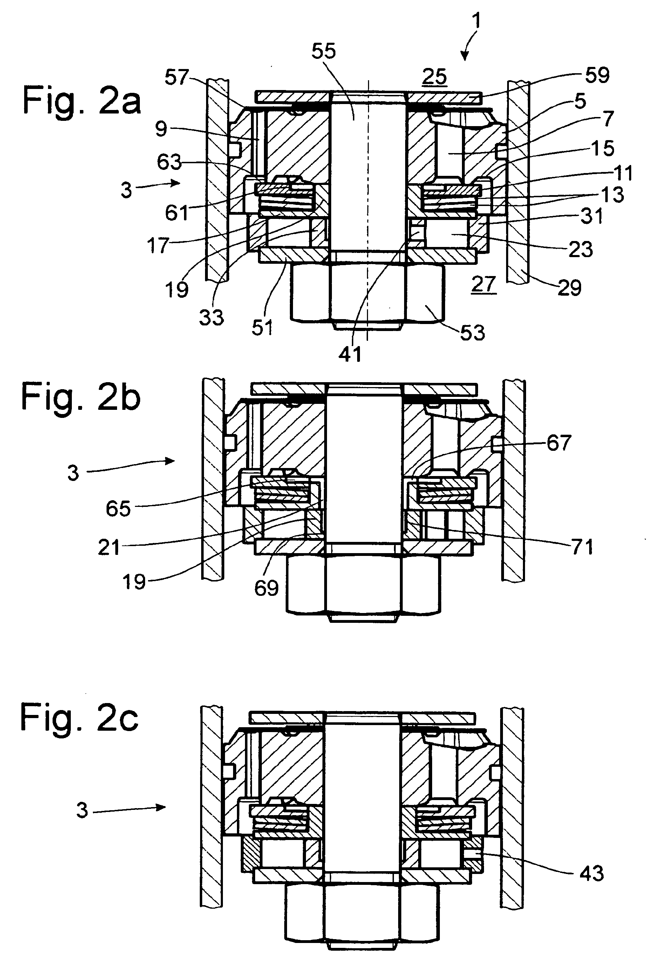

Die Fig. 1 zeigt eine Dämpfventileinrichtung 1, wie sie in den Schnittdarstellungen eines Schwingungsdämpfers 3 nach den Fig. 2a - 2c verwendet wird. Die Dämpfventileinrichtung umfasst einen an sich bekannten Kolben 5 mit Durchtrittsöffnungen 7; 9 (Fig. 2a - 2c). In der Fig. 1 ist eine starre Ventilscheibe 11 erkennbar, die von mehreren Scheibenfedern 13 gegen eine Ventilsitzfläche 15 am Kolben 5 vorgespannt wird.

Zur Begrenzung der Abhubbewegung der Ventilscheibe 11 dient eine Stützscheibe 17. In der Zusammenschau mit Fig. 2b ist ersichtlich, dass die Stützscheibe einen Hülsenabschnitt 19 mit mindestens einer Axialnut 21 als Teil einer Bypassverbindung zwischen einer Arbeitskammer 23 und Arbeitsräumen 25; 27 bildet, die von dem Kolben 5 innerhalb eines Zylinders 29 getrennt werden.

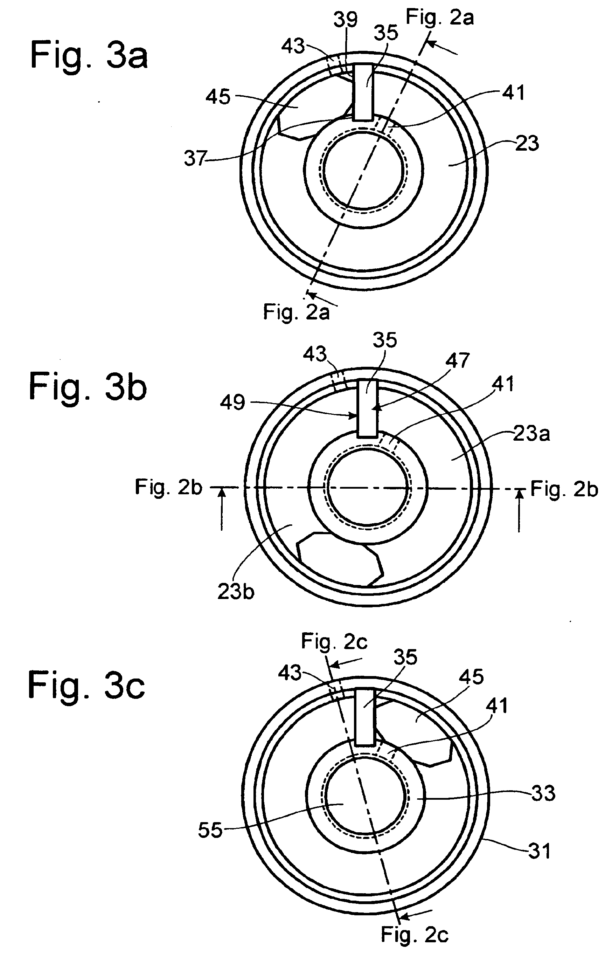

Die Arbeitskammer 23 weist einen kreisringförmigen Querschnitt auf (Fig. 3a - 3c) und wird von einem Außenring 31 und einem Innenring 33 gebildet. Zwischen den beiden Ringen 31; 33 liegt ein Steg 35 als eine ortsfeste Wandung der Arbeitskammer 23 vor. Zur einfachen Fixierung können die beiden Ringe 31, 33 nutförmige Aufnahmen 37; 39 für den Steg 35 aufweisen, die in Umfangsrichtung zueinander ausrichtet sind. Der Steg 35 trennt Anschlussöffnungen 41; 43 für einen Zulauf und einen Ablauf von Dämpfmedium für die Arbeitskammer 23.

In der kreisringförmigen Arbeitskammer 23 ist eine in Umfangsrichtung bewegliche Wandung 45 angeordnet. Die Wandung 45 wird von einem in der Ebene der Arbeitskammer gekrümmten Gleitkörper gebildet, der an seinem Innen- und Außendurchmesser den Konturen des Innen- und Außenrings angepasst ist. Für den Gleitkörper wird bevorzugt ein in Grenzen elastischer Kunststoff verwendet. Die Winkelbeweglichkeit erstreckt sich von einer Anschlagfläche 47 bis gegenüberliegenden Anschlagfläche 49 am Steg 35. Zwischen einer weiteren Scheibe 51 und der Stützscheibe 17 sind der Außenring 31 und der Innenring 33 axial verspannt. Die Stützscheibe 17 und die weitere Scheibe 51 dienen als Deckscheiben für den axialen Verschluss der Arbeitskammer 23.

Wie die Figurenfolge 2a - 2c zeigt, wird die gesamte Dämpfventileinrichtung 1 von einer Mutter als Befestigungsmittel 53 an einer Kolbenstange 55 fixiert, wobei sich der Außenring 31 über einen inneren Absatz an der äußeren Mantelfläche der weiteren Scheibe 51 zentriert: Auch auf einer Kolbenoberseite ist mindestens eine elastische Ventilscheibe 57 in Verbindung mit einer Anschlagscheibe 59 angeordnet, die mit dem Durchtrittsquerschnitt 9 zusammenwirken.

Für eine amplitudenabhängige Dämpfkraft muss das in den Arbeitsräumen 25; 27 befindliche Dämpfmedium über eine Bypassverbindung zu der Ventilscheibe 11 und der Ventilsitzfläche 15 in die Arbeitskammer 23 gelangen. Die Ventilscheibe 11 bildet einen Teil der Bypassverbindung, indem sie über einen Absatz 61 zu ihrer Ventilsitzkontaktfläche 63 verfügt. Dadurch entsteht zwischen der Unterseite des Kolbens 5 und dem Absatz 61 ein Ringraum 65, der an die Durchtrittsöffnung 7 des Dämpfventils 13; 15 angeschlossen ist. In dem sich stirnseitig am Kolben 5 abstützenden Hülsenabschnitt 19 ist mindestens eine Radialöffnung 67 ausgeführt, die den Ringraum 65 mit den Axialkanälen 21 verbindet.

Der Innenring weist einen Zentrierabsatz 69 auf, der auf der Kolbenstange 55 anliegt. Der dadurch vorliegende Differenzdurchmesser zwischen dem Innenring und dem Zentrierabsatz bzw. der Kolbenstange 55 bildet einen weiteren Teilabschnitt 71 der Bypassverbindung in Richtung der Arbeitskammer 23.

Bei einer Kolbenstangenbewegung in Richtung des oberen Arbeitsraums 25 wird Dämpfmedium aus diesem Arbeitsraum in den Durchtrittskanal 7 verdrängt. Das Dämpfmedium kann am Ende des Durchtrittskanals 7 in den Ringraum 65 und über die mindestens eine Radialöffnung 67 in die mindestens eine Axialnut 21 im Hülsenabschnitt 19 weiterfließen. Den Axialnuten 21 schließt sich der ringförmige Teilabschnitt 71 an, so dass das Dämpfmedium über die Anschlussöffnung 41 im Innenring 33 in die Arbeitskammer 23 einströmen kann, ohne dass die Ventilscheibe 11 gegen die Vorspannkraft der Scheibenfedern 13 von der Ventilsitzfläche 15 des Kolbens 5 abhebt.

Die Figuren 3a bis 3c zeigen das weitere Betriebsverhalten der Dämpfventileinrichtung 1. Das Dämpfmedium bewegt die Wandung 45 ausgehend von der Anschlagfläche 47 bis maximal zur Anschlagfläche 49 des Stegs 35, wobei die Anschlussöffnungen 41; 43 von der Wandung 45 nicht abgedeckt werden. In dem Maße wie die Arbeitkammer 23a wächst, nimmt die Arbeitskammer 23b ab. Zumindest dann, wenn die Wandung 45 an einer Anschlagfläche 47; 49 anliegt, ist der weitere Zustrom von Dämpfmedium in die Arbeitskammer 23a erschöpft, so dass das Dämpfmedium bei einer anhaltenden Kolbenstangenbewegung die Ventilscheibe 13 von der Ventilsitzfläche 15 abhebt und dabei eine deutlich höhere Dämpfkraft erzeugt.

Eine Kolbenstangeneinfahrbewegung, z. B. ausgehend von der Fig. 3a, führt zu einer Befüllung der Arbeitskammer 23b aus dem Arbeitsraum 27 des Zylinder 29 über die Anschlussöffnung 43. Bis zum Erreichen der Anschlagfläche 47 am Steg 35 kann Dämpfmedium aus dem Arbeitsraum 23a über die Anschlussöffnung 41 in den Teilabschnitt 71 und weiter über den Hülsenabschnitt 21 in den Ringraum 65 abfließen, so dass für den weiteren Strömungsweg der Durchtrittsquerschnitt 7 zur Verfügung steht, wobei in dieser Bewegungsphase der Kolbenstange eine vergleichsweise kleine Dämpfkraft erzeugt wird. Wenn die bewegliche Wandung 45 entsprechend der Fig. 3c ihre Endstellung erreicht hat, steht für das Dämpfmedium nur der Weg über den Durchtrittskanal 9 zur Verfügung, wobei mit der Abhubbewegung der Ventilscheibe 57 eine erhöhte Dämpfkraft erzeugt wird.

### Bezugszeichenliste

| | |
|---|---|
| Dämpfventileinrichtung | 1 |
| Schwingungsdämpfer | 3 |
| Kolben | 5 |
| Durchtrittsöffnungen | 7; 9 |
| Ventilscheibe | 11 |
| Scheibenfedern | 13 |
| Ventilsitzfläche | 15 |
| Stützscheibe | 17 |
| Hülsenabschnitt | 19 |
| Axialnut | 21 |
| Arbeitskammer | 23 |
| Arbeitsräumen | 25; 27 |
| Zylinder | 29 |
| Außenring | 31 |
| Innenring | 33 |
| Steg | 35 |
| Aufnahmen | 37; 39 |
| Anschlussöffnungen | 41; 43 |
| bewegliche Wandung | 45 |
| Anschlagfläche | 47, 49 |
| Weitere Scheibe | 51 |
| Befestigungsmittel | 53 |
| Kolbenstange | 55 |
| Ventilscheibe | 57 |
| Anschlagscheibe | 59 |
| Absatz | 61 |
| Ventilsitzkontaktfläche | 63 |
| Ringraum | 65 |
| Radialöffnung | 67 |
| Zentrierabsatz | 69 |
| Teilabschnitt | 71 |

## Patentansprüche

1. Schwingungsdämpfer (3) mit amplitudenselektiver Dämpfkraft, umfassend eine Kolbenstange (55) mit einem Kolben, der mit mindestens einem Dämpfventil (7; 9; 11; 13; 15; 57) bestückt ist, wobei der Kolben (5) zwei Arbeitsräume (25; 27) in einem Zylinder (29) unterteilt und zu dem mindestens einen Dämpfventil (7; 9; 11; 13; 15; 57) eine Bypassverbindung (21; 65; 67; 71) zwischen einem Arbeitsraum (25; 27) und einer Arbeitskammer (23) mit einer beweglichen Wandung (45) besteht,
**dadurch gekennzeichnet,**
**dass** die Arbeitskammer (23) einen kreisringförmigen Querschnitt aufweist, in der die Wandung (45) in Umfangsrichtung beweglich ausgeführt ist, wobei ein Zulauf in die Arbeitskammer (23) von einem Ablauf von einer ortsfesten Wandung (35) getrennt sind.

2. Schwingungsdämpfer nach Anspruch 1,
**dadurch gekennzeichnet,**
**dass** die Arbeitskammer (23) von einem Außenring (31) und einem Innenring (33) gebildet wird und zwischen beiden Ringen (31; 33) als ortsfeste Wandung ein Steg (35) vorliegt.

3. Schwingungsdämpfer nach Anspruch 2,
**dadurch gekennzeichnet,**
**dass** in mindestens einem der beiden Ringe (31; 33) eine Anschlussöffnung (41; 43) zu einem der beiden Arbeitsräume (25; 27) ausgeführt ist.

4. Schwingungsdämpfer nach Anspruch 1,
**dadurch gekennzeichnet,**
**dass** die Arbeitskammer (23) eine Deckscheibe (17) aufweist, die für mindestens eine Ventilscheibe (11) des Dämpfventils (11; 13; 15) eine Stützscheibe bildet.

5. Schwingungsdämpfer nach Anspruch 4,
**dadurch gekennzeichnet,**
**dass** sich der Außenring (31) an der Deckscheibe (17) zentriert.

6. Schwingungsdämpfer nach Anspruch 4,
**dadurch gekennzeichnet,**
**dass** der Außenring (31) und der Innenring (33) zwischen der Stützscheibe (17) und einer weiteren Scheibe (51) axial verspannt sind.

7. Schwingungsdämpfer nach Anspruch, 4
**dadurch gekennzeichnet,**
**dass** die Stützscheibe (17) einen Anschlusskanal (21; 67) als Teil der Bypassverbindung bildet.

8. Schwingungsdämpfer nach Anspruch 7,
**dadurch gekennzeichnet,**
**dass** die Stützscheibe (17) einen Hülsenabschnitt (19) aufweist, der sich stirnseitig am Kolben (5) abstützt.

9. Schwingungsdämpfer nach Anspruch 8,
**dadurch gekennzeichnet,**
**dass** in dem Hülsenabschnitt (19) mindestens eine Axialnut (21) als Teil der Bypassverbindung ausgeführt ist.

10. Schwingungsdämpfer nach Anspruch 8,
**dadurch gekennzeichnet,**
**dass** in dem Hülsenabschnitt (19) mindestens eine Radialöffnung (67) als Teil der Bypassverbindung ausgeführt ist.

11. Schwingungsdämpfer nach Anspruch 1,
**dadurch gekennzeichnet,**
**dass** eine Ventilscheibe (11) des Dämpfventils(11; 15) einen Kanal als Teil der Bypassverbindung zur Arbeitskammer (23) aufweist.

12. Schwingungsdämpfer nach Anspruch 11,
**dadurch gekennzeichnet,**
**dass** die Ventilscheibe (11) einen Absatz (61) zu einer Ventilsitzkontaktfläche (63) aufweist.

13. Schwingungsdämpfer nach Anspruch 12,
**dadurch gekennzeichnet,**
**dass** der Absatz (61) der Ventilscheibe (11) an eine Durchtrittsöffnung (7) des Dämpfventils (11; 15) angeschlossen ist.

14. Schwingungsdämpfer nach Anspruch 2,
**dadurch gekennzeichnet,**
**dass** einer der Ringe (31; 33), die die Arbeitskammer (23) begrenzen, einen Zentrierabsatz (69) aufweist, wobei der Differenzdurchmesser zwischen dem Ring (33) und dem Zentrierabsatz (69) einen Teilabschnitt (71) der Bypassverbindung bildet.

## Claims

1. Vibration damper (3) having amplitude-selective damping force, comprising a piston rod (55) with a piston which is equipped with at least one damping valve (7; 9; 11; 13; 15; 57), the piston (5) subdividing two working spaces (25; 27) in a cylinder (29), and a bypass connection (21; 65; 67; 71) being present, with respect to the at least one damping valve (7; 9; 11; 13; 15; 57), between a working space (25; 27) and a working chamber (23) having a movable wall (45), **characterized in that** the working chamber (23) has an annular cross section in which the wall (45) is formed so as to be movable in the circumferential direction, an inflow into the working chamber (23) being separated from an outflow by a fixed wall (35).

2. Vibration damper according to Claim 1, **characterized in that** the working chamber (23) is formed by an outer ring (31) and an inner ring (33), and a web (35) is present as a fixed wall between the two rings (31; 33).

3. Vibration damper according to Claim 2, **characterized in that** a connecting port (41; 43) to one of the two working spaces (25; 27) is formed in at least one of the two rings (31; 33).

4. Vibration damper according to Claim 1, **characterized in that** the working chamber (23) has a cover disc (17) which forms a supporting disc for at least one valve disc (11) of the damping valve (11; 13; 15).

5. Vibration damper according to Claim 4, **characterized in that** the outer ring (31) is centred on the cover disc (17).

6. Vibration damper according to Claim 4, **characterized in that** the outer ring (31) and the inner ring (33) are braced axially between the supporting disc (17) and a further disc (51).

7. Vibration damper according to Claim 4, **characterized in that** the supporting disc (17) forms a connecting duct (21; 67) as part of the bypass connection.

8. Vibration damper according to Claim 7, **characterized in that** the supporting disc (17) has a sleeve portion (19) which is supported on the end face against the piston (5).

9. Vibration damper according to Claim 8, **characterized in that** at least one axial groove (21) is formed as part of the bypass connection in the sleeve portion (19).

10. Vibration damper according to Claim 8, **characterized in that** at least one radial port (67) is formed as part of the bypass connection in the sleeve portion (19).

11. Vibration damper according to Claim 1, **characterized in that** a valve disc (11) of the damping valve (11; 15) has a duct as part of the bypass connection to the working chamber (23).

12. Vibration damper according to Claim 11, **characterized in that** the valve disc (11) has a shoulder (61) with respect to a valve-seat contact face (63).

13. Vibration damper according to Claim 12, **characterized in that** the shoulder (61) of the valve disc (11) is connected to a passage orifice (7) of the damping valve (11; 15) .

14. Vibration damper according to Claim 2, **characterized in that** one of the rings (31; 33) which delimit the working chamber (23) has a centring shoulder (69), the differential diameter between the ring (33) and the centring shoulder (69) forming a portion (71) of the bypass connection.

## Revendications

1. Amortisseur de vibrations (3) avec une force d'amortissement sélective en fonction de l'amplitude, comprenant une tige de piston (55) avec un piston qui est pourvu d'au moins une soupape d'amortissement (7 ; 9 ; 11 ; 13 ; 15 ; 57), le piston (5) étant divisé en deux espaces de travail (25 ; 27) dans un cylindre (29) et une connexion de dérivation (21 ; 65 ; 67 ; 71) vers au moins une soupape d'amortissement (7 ; 9 ; 11 ; 13 ; 15 ; 57) existant entre un espace de travail (25 ; 27) et une chambre de travail (23) avec une paroi mobile (45),
**caractérisé en ce que**
la chambre de travail (23) présente une section transversale de forme annulaire circulaire dans laquelle la paroi (45) est réalisée de manière déplaçable dans la direction périphérique, une amenée dans la chambre de travail (23) étant séparée d'une sortie d'une paroi fixe (35).

2. Amortisseur de vibrations selon la revendication 1,
**caractérisé en ce que**
la chambre de travail (23) est formée par une bague extérieure (31) et une bague intérieure (33) et une nervure (35) existe entre les deux bagues (31 ; 33) et sert de paroi fixe.

3. Amortisseur de vibrations selon la revendication 2,
**caractérisé en ce que**
une ouverture de raccordement (41 ; 43) est réalisée vers l'un des deux espaces de travail (25 ; 27) dans au moins l'une des deux bagues (31 ; 33).

4. Amortisseur de vibrations selon la revendication 1,
**caractérisé en ce que**
la chambre de travail (23) présente un disque de recouvrement (17) qui forme pour au moins un disque de soupape (11) de la soupape d'amortissement (11 ; 13 ; 15) un disque de support.

5. Amortisseur de vibrations selon la revendication 4,
**caractérisé en ce que**
la bague extérieure (31) est centrée sur le disque de recouvrement (17).

6. Amortisseur de vibrations selon la revendication 4,
**caractérisé en ce que**
la bague extérieure (31) et la bague intérieure (33) sont serrées axialement entre le disque de support (17) et un autre disque (51).

7. Amortisseur de vibrations selon la revendication 4,
**caractérisé en ce que**
le disque de support (17) forme un canal de raccordement (21 ; 67) qui forme une partie de la connexion de dérivation.

8. Amortisseur de vibrations selon la revendication 7,
**caractérisé en ce que**
le disque de support (17) présente une portion de douille (19) qui s'appuie du côté frontal sur le piston (5).

9. Amortisseur de vibrations selon la revendication 8,
**caractérisé en ce que**
au moins une rainure axiale (21) est réalisée en tant que partie de la connexion de dérivation dans la portion de douille (19).

10. Amortisseur de vibrations selon la revendication 8,
**caractérisé en ce que**
au moins une ouverture radiale (67) est réalisée en tant que partie de la connexion de dérivation dans la portion de douille (19).

11. Amortisseur de vibrations selon la revendication 1,
**caractérisé en ce que**
le disque de soupape (11) de la soupape d'amortissement (11 ; 15) présente un canal en tant que partie de la connexion de dérivation à la chambre de travail (23).

12. Amortisseur de vibrations selon la revendication 11,
**caractérisé en ce que**
le disque de soupape (11) présente un épaulement (61) vers une surface de contact de siège de soupape (63).

13. Amortisseur de vibrations selon la revendication 12,
**caractérisé en ce que**
l'épaulement (61) du disque de soupape (11) est raccordé à une ouverture de passage (7) de la soupape d'amortissement (11 ; 15).

14. Amortisseur de vibrations selon la revendication 2
**caractérisé en ce**
**que** l'une des bagues (31 ; 33) qui limitent la chambre de travail (23) présente un épaulement de centrage (69), la différence de diamètre entre la bague (33) et l'épaulement de centrage (69) formant une portion partielle (71) de la connexion de dérivation.
